# EUROPEAN PATENT SPECIFICATION

(11) **EP 3 812 550 B1**
(45) Date of publication and mention of the grant of the patent: **24.12.2025**
(21) Application number: 19823670.5
(22) Date of filing: 14.06.2019
(51) Int. Cl.: F01D 5/18, F01D 25/12, F01D 5/30

(54) **GAS TURBINE**
GASTURBINE
TURBINE À GAZ

(30) Priority: 21.06.2018 KR 20180071317
(43) Date of publication of application: 28.04.2021
(73) Proprietor: Korea Institute of Machinery & Materials, Daejeon 34103 (KR)
(72) Inventor: KIM, Jin Sub, Seoul 05507 (KR); LEE, Jungho, Daejeon 34049 (KR); SHIN, Dong Hwan, Daejeon 34049 (KR); SOHN, Jeong Lak, Sejong 30126 (KR); KANG, Dowon, Daejeon 34116 (KR)
(74) Representative: Gaunt, Thomas Derrick
(86) International application number: PCT/KR2019/007200
(87) International publication number: WO 2019/245237

(56) References cited:
- EP-A1- 3 081 755
- DE-A1- 2 101 096
- KR-B1- 101 317 443
- KR-B1- 101 617 705
- US-A- 3 334 685
- US-A- 3 334 685
- US-A- 5 299 418
- US-A1- 2008 310 955
- US-A1- 2016 319 667

## Description

### BACKGROUND

### 1. Field of Invention

The present disclosure of invention relates to a gas turbine in which a turbine blade is cooled more effectively.

### 2. Description of Related Technology

A gas turbine is a type of an internal combustion engine in which a high temperature and high pressure combustion gas is expanded to rotate a turbine for obtaining a rotational force. The gas turbine generally includes a compressor compressing an air from outside, a combustor mixing the compressed air with a fuel for combusting, and a turbine rotated by an expensive force of the combusted gas exhausted by the combustor. The gas turbine has a relatively simple structure and a relatively larger power, compared to a reciprocal internal combustion engine or a steam turbine, and thus the gas turbine is normally used for a power plant, a railway vehicle, a ship, an airplane and so on. The gas turbine may be called as a jet engine.

An efficiency of the gas turbine is increased as a compression ratio of the air and a temperature of the combustion gas are increased. Recently, heat-resisting coating technology and cooling technology for a blade are developed, to increase the temperature of the combustion gas by about 1,700°C, and thus performance of the gas turbine may be maximized.

However, as the temperature of the combustion gas increases, heat-resisting of the gas turbine becomes an important problem to be solved. For example, among the elements of the gas turbine exposed to the high temperature combustion gas, the blade is the most weak element to the heat. Thus, to increase the heat-resisting of the blade, various kinds of cooling methods have been developed. For example, convection cooling, impingement cooling, air film cooling and transpiration cooling are the cooling method normally used recently.

In the convection cooling, a cooling air passes through a plurality of air passages formed inside of the blade, and thus convection occurs between the cooling air and a hot air for the cooling. The convection cooling was used in the early days.

The impingement cooling is a type of the convection cooling, and in the convection cooling, a small cylindrical shape tube is formed at a leading edge of the blade, and the cooling air discharged from a holes of the tube is forced to be intensively impacted to the leading edge of the blade, and thus the heat may be absorbed.

In the air film cooling, the cooling air is discharged from a hole or a slit diagonally formed at a surface of the blade, and the discharged cooling air forms a thin air layer on the surface of the blade to prevent the high temperature gas from making direct contact with the blade.

In the transpiration cooling, a wall of the blade includes a porous material and the cooling air is discharged through the porous material, and thus the thin air layer is formed on the surface of the blade.

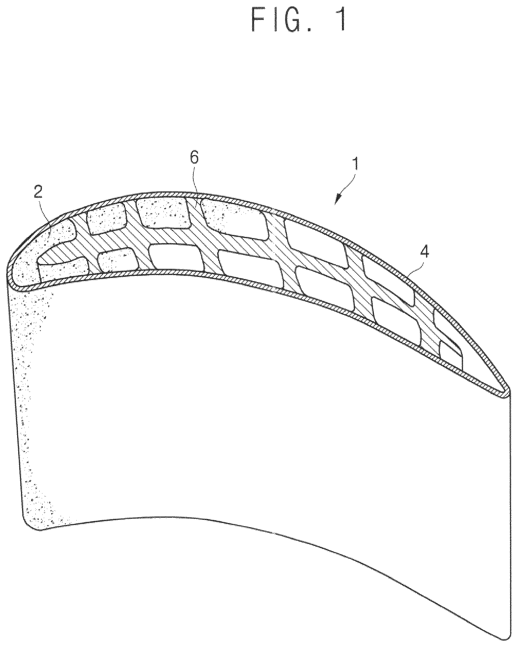

FIG. 1 is a perspective view illustrating a blade of a conventional gas turbine, and FIG. 1 shows the blade in the conventional transpiration cooling type gas turbine.

As illustrated in FIG. 1, the blade 1 for the conventional gas turbine includes a body 2 and a porous heat-resisting layer 4. The body 2 has an air foil shape in which a cooling channel 6 is formed, and the body 2 has a porous material. The porous heat-resisting layer 4 is formed at an outer surface of the body 2. The porous heat-resisting layer 4 having a multi-layer is integrally formed on the outer surface of the body 2 via an electroplating.

The blade may be damaged by distortion of the shape due to friction with the combustion gas, an inner crack due to thermal stress, porous blockage due to corrosion and deposit, and so on. For example, the inner crack of the blade may occur due to the thermal stress which is caused by temperature difference between an inside and an outside of the blade, and the blade may be fully damaged as the inner crack increases.

Thus, the cooling for the blade is very important for all types of gas turbines including the convection cooling, the impingement cooling, the air film cooling and the transpiration cooling.

Related prior art includes KR10-1617705, US3334685, EP3081755 and DE 2101096.

### SUMMARY

The present invention is developed to solve the above-mentioned problems of the related arts. The present invention provides a gas turbine capable of cooling a turbine blade more efficiently, according to claim 1.

Other embodiments of the invention are defined in dependent claims 2 to 7.

As the hub rotates, the operating fluid in the heat transfer part is circulated due to the centrifugal force according to the rotation of the hub and the blade, and thus a phase of the operating fluid is changed to cool the air foil. Thus, a wick structure for circulating the operating fluid may be removed.

Alternatively, when the hub extends along a direction without the rotation, the operating fluid falls freely due to the gravity and is circulated, and thus the phase of the operating fluid is changed to cool the air foil. Thus, the wick structure for circulating the operating fluid may be also removed.

### BRIEF DESCRIPTION OF THE DRAWINGS

FIG. 1 is a perspective view illustrating a blade of a conventional gas turbine;
FIG. 2 is a perspective view partially illustrating a gas turbine according to an example embodiment of the present invention;
FIG. 3 is a perspective view illustrating a blade of the gas turbine in FIG. 2;
FIG. 4 is a cross-sectional view of the blade of the gas turbine in FIG. 2;
FIG. 5 is a schematic diagram illustrating a circulation of an operating fluid in a heat transfer part of the gas turbine in FIG. 2;
FIG. 6 is a cross-sectional view along a line A-A' of FIG. 3;
FIG. 7 is a cross-sectional view of a blade of a gas turbine according to another example embodiment of the present invention;
FIG. 8 is a side view partially illustrating a gas turbine according to still another example embodiment of the present invention; and
FIG. 9 is a cross-sectional view of a blade of the gas turbine in FIG. 8.

### * Reference numerals

10, 20, 30 : gas turbine
110, 111 : combining slit
210, 510 : root
220, 520 : platform
230, 530 : air foil
300, 300a, 300b, 300c, 300d, 600 : heat transfer part
310, 610 : first heat transfer portion
330, 630 : liquid state operating fluid
400, 700 : charging fixing part

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section. Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The invention is described more fully hereinafter with reference to the accompanying drawings, in which embodiments of the invention are shown.

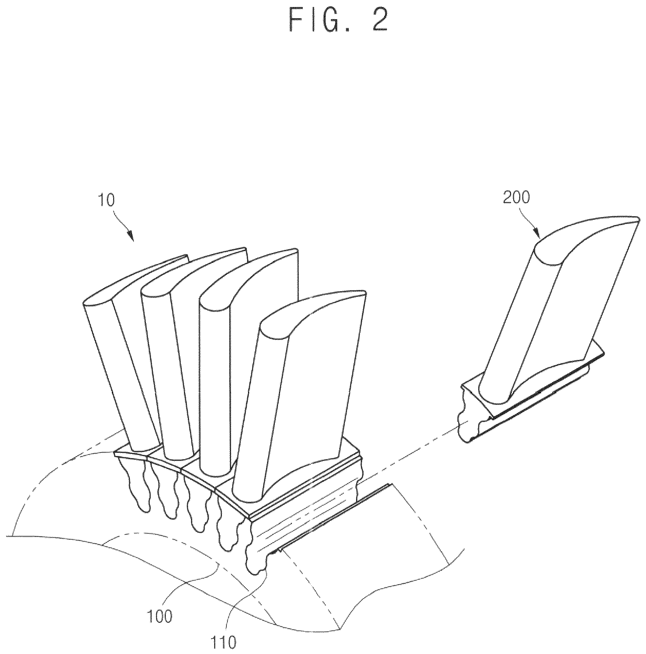

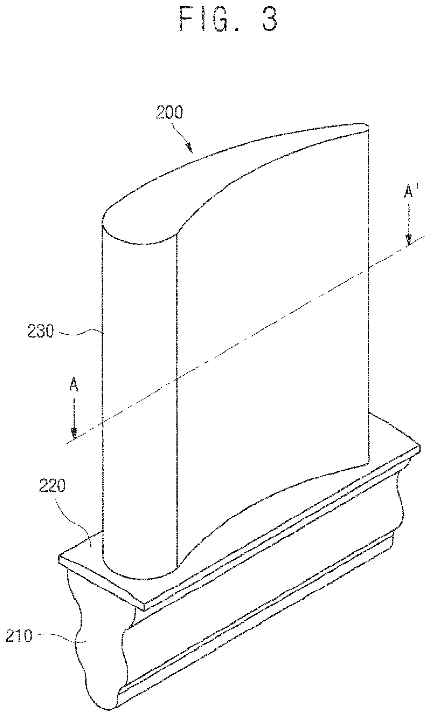

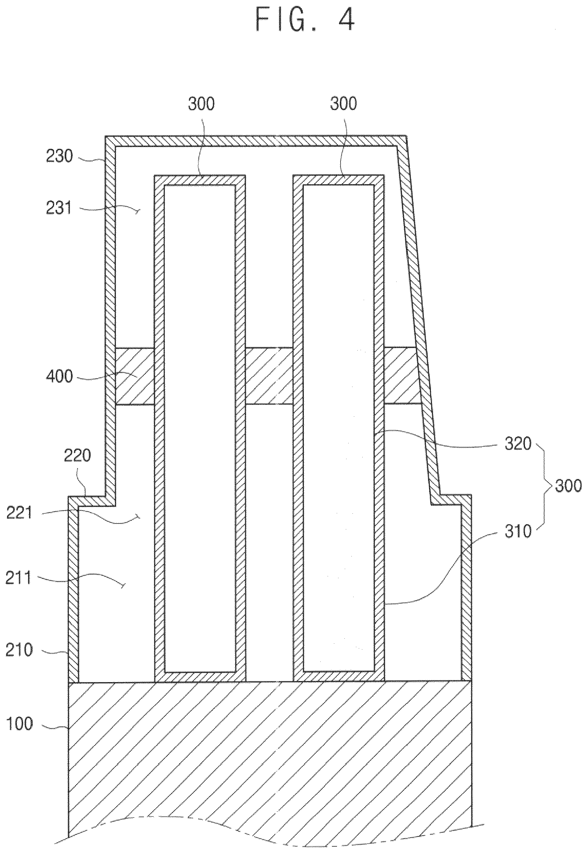

FIG. 2 is a perspective view partially illustrating a gas turbine according to an example embodiment of the present invention. FIG. 3 is a perspective view illustrating a blade of the gas turbine in FIG. 2. FIG. 4 is a cross-sectional view of the blade of the gas turbine in FIG. 2.

Referring to FIGS. 2 to 4, the gas turbine 10 according to the present example embodiment includes a hub 100, a blade 200 and a heat transfer part 300.

Although not shown in the figure, the hub 100 may rotate with respect to a central axis thereof. Here, the hub 100 has a predetermined thickness, and may have a hollow cylindrical plate shape, for example a ring shape, and the thickness may be variously changed.

A combining slit 110 is formed on an outer surface of the hub 100, and a plurality of combining slits 110 may be formed along a circumferential direction of the hub 100 by a predetermined distance. Here, as the hub 100 has the predetermined thickness, a thickness of the combining silt 110 may be substantially same as that of the hub 100. In addition, over the entire outer surface of the hub 100, the combining slits 110 may be formed.

The blade 200 includes a root 210, a platform 220 and an air foil 230.

The root 210 has an outer shape substantially same as an outer shape of the combining slit 110, so as to be combined with the combining slit 110, and thus the root 210 is inserted into the combining slit 110. The root 210 has a first space 211 inside of the root 210.

The platform 220 is disposed over the root 210.

Here, when the root 210 of each blade 200 is combined with the combining slit 110, the platforms 220 of the blades 200 adjacent to each other may be continuously disposed with each other.

The platform 220 has a second space 221 inside of the platform 220, and the second space 221 is connected to the first space 211 of the root 210.

The air foil 230 is disposed over the platform 220. The air foil 230 has a third space 231 inside of the air foil 230, and the third space 231 is connected to the second space 221 of the platform 220.

Accordingly, the first space 211, the second space 221 and the third space 231 are continuously connected with each other.

The heat transfer part 300 may include a metal material. The heart transfer part 300 extends through the first space 211, the second space 221 and the third space 231. For example, the heat transfer part 300 may extend along a radial direction of the hub 100.

The heat transfer part 300 may be disposed in a plural, and the heat transfer parts 300 adjacent to each other may be disposed with each other by a predetermined distance.

The heat transfer part 300 includes a first heat transfer portion 310 and a second heat transfer portion 320.

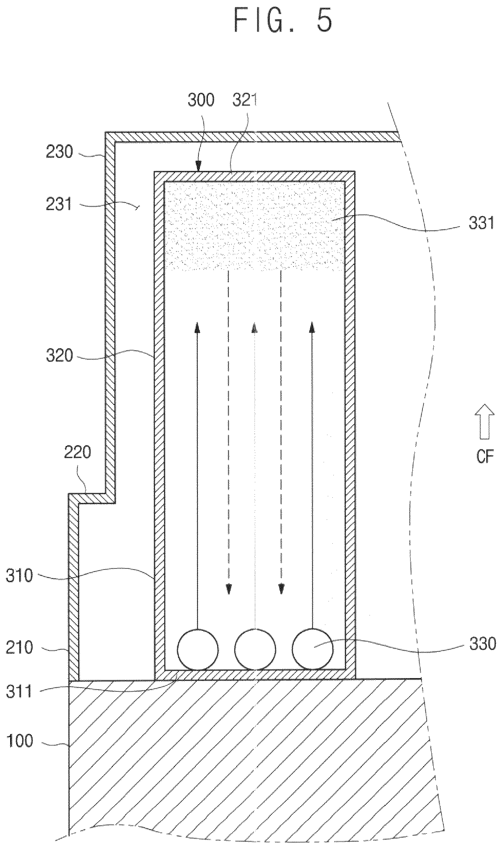

The first heat transfer portion 310 is disposed in the first space 211, and a first end 311 (referring to FIG. 5) of the first heat transfer portion 310 is sealed.

A first end of the second heat transfer portion 320 is connected to a second end of the first heat transfer portion 310, and the second heat transfer portion 320 is disposed in the second space 221 and the third space 231.

In addition, a second end 321 (referring to FIG. 5) of the second heat transfer portion 320 is sealed. Thus, the heat transfer part 300 is continuously formed, and both ends of the heat transfer part 300 are sealed, so that the heat transfer part 300 may be prevented from being leaked.

In addition, an operating fluid is received inside of the heat transfer part 300, and the operating fluid is sealed inside of the heat transfer part 300 and is prevented from being leaked.

The gas turbine 10 according to the present example embodiment may further include a fixing part 400. The fixing part 400 is extended in at least one of the first, second and third spaces 211, 221 and 231, to fix and support the heat transfer part 300. Here, the fixing part 400 may be extended at a portion of at least one of the first, second and third spaces 211, 221 and 231.

The charging fixing part 400 may include a metal material having a relatively high heat transfer coefficient. Thus, the heat transfer between the blade 200 and the heat transfer part 300 may be performed more efficiently.

FIG. 5 is a schematic diagram illustrating a circulation of an operating fluid in a heat transfer part of the gas turbine in FIG. 2.

Referring to FIG. 5, due to the centrifugal force CP generated according to the rotation of the hub 100 and the blade 200, the operating fluid inside of the heat transfer part 300 is circulated to transfer the heat of the air foil 230 toward the hub 100, and thus the heat may be effectively dissipated.

For example, the first end 311 of the first heat transfer portion 310 may be disposed in a line with a lower surface of the root 210. The first end 311 may be disposed on the lower surface of the root 210, and may be fixed to the lower surface of the root 210 along an extending direction of the lower surface of the root 210. Thus, as the root 210 is combined with the combining slit 110, the first end 311 of the first heat transfer portion 310 may be tightly attached to the hub 100.

As the hub 100 and the blade 200 rotate, the centrifugal force CF is generated. Thus, due to the centrifugal force CF, the operating fluid 330 with a liquid state in the first heat transfer portion 310 moves toward the air foil 230 to be moved into the second heat transfer portion 320.

Here, the operating fluid 330 with the liquid state moving into the second heat transfer portion 320, is heated by the heat of the air foil 230, and thus a phase of the operating fluid 330 is changed into an operating fluid 331 with a gas state.

The operating fluid 330 with the liquid state having a relatively larger mass is continuously moved to the second heat transfer portion 320, due to the centrifugal force CF. As the operating fluid 330 with the liquid state continuously moves to fill the second heat transfer portion 320, the operating fluid 330 with the gas state in the second heat transfer portion 320 is moved and circulated to the first heat transfer portion 310.

Here, the first heat transfer portion 310 makes contact with the hub 100, and the temperature of the hub 100 is lower than that of the air foil 230, so that the operating fluid 331 with the gas state moving toward the first heat transfer portion 310 is condensed and phase-changed to be the operating fluid 330 with the liquid state. Here, as the operating fluid 331 with the gas state is condensed and phase-changed to be the operating fluid 330 with the liquid state, the heat is dissipated outwardly.

Here, the first heat transfer portion 310 may be a condensing part, and the second heat transfer portion 320 may be an evaporating part.

According to the present example embodiment, the operating fluid of the heat transfer part 300 is continuously circulated and phase-changed inside of the heat transfer part 300 due to the centrifugal force CF according to the rotation of the hub 100 and the blade 200, and thus the air foil 230 may be effectively cooled.

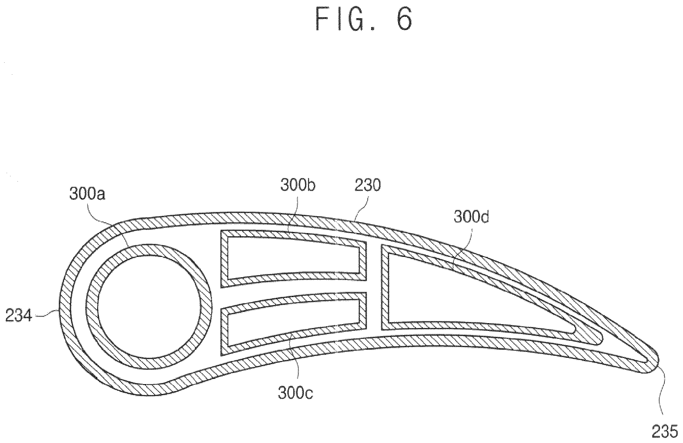

FIG. 6 is a cross-sectional view along a line A-A' of FIG. 3.

Referring to FIG. 6, the heat transfer part may be formed in a plural. Each of the heat transfer parts 300a, 300b, 300c and 300d, may have a cross-sectional shape corresponding to a cross-sectional shape of the air foil 230, based on the position of each of the heat transfer parts 300a, 300b, 300c and 300d inside of the air foil 230.

Here, each of the heat transfer parts 300a, 300b, 300c and 300d may have an outer shape corresponding to an outer shape of the air foil 230 at each position of the heat transfer parts 300a, 300b, 300c and 300d. Here, since the heat transfer parts 300a, 300b, 300c and 300d are disposed inside of the air foil 230, each of the heat transfer parts 300a, 300b, 300c and 300d adjacent to an outer surface of the air foil 230 may have the outer shape close to the outer shape of the air foil 230.

For example, a leading edge 234 of the air foil 230 has a half-circular shape, as illustrated in FIG. 5, and thus the heat transfer part 300a may have a circular shape, viewed in a cross-sectional view. In addition, a trailing edge 235 of the air foil 230 has a wing shape, and thus an end portion of the heat transfer part 300d may have the wing shape, viewed in a cross-sectional view.

Likewise, when the air foil 230 positioned between the leading edge 234 and the trailing edge 235 has a round shape with a predetermined curvature, the outer portions of the heat transfer parts 300b and 300c may partially have the round shape with the predetermined curvature, viewed in a cross-sectional view.

Here, the number of the heat transfer parts may be variously changed considering the size, the shape, the structure and so on of the air foil 230.

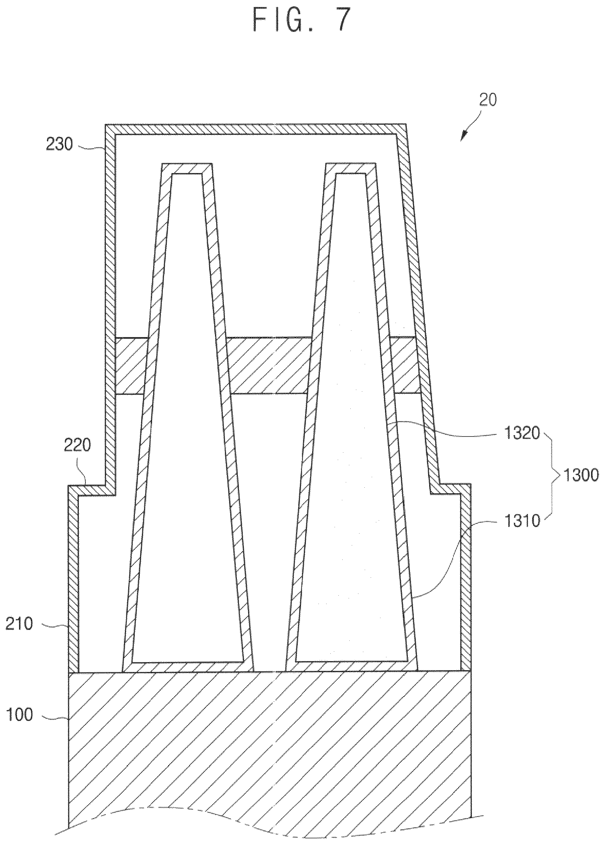

FIG. 7 is a cross-sectional view of a blade of a gas turbine according to another example embodiment of the present invention.

The gas turbine 20 according to the present example embodiment is substantially same as the gas turbine 10 according to the previous example embodiment in FIGS. 2 to 6, except for a shape of a heat transfer part 1300, and thus, same reference numerals are used for same elements and any repetitive explanation will be omitted.

Referring to FIG. 7, in the gas turbine 20 according to the present example embodiment, the heat transfer part 1300 includes first and second heat transfer portions 1310 and 1320. A cross-sectional area of the heat transfer part 1300 is gradually increased from the second heat transfer portion 1320 toward the first heat transfer portion 1310.

Accordingly, in the heat transfer part 1300 according to the present example embodiment, the cross-sectional area is gradually increased from the second heat transfer portion 1320 toward the first heat transfer portion 1310, so that the operating fluid with the gas state may be diffused more effectively in the first heat transfer portion 1310. Thus, the operating fluid with the gas state in the second heat transfer portion 1320 may be moved to the first heat transfer portion 1310 more smoothly.

In addition, the contact area between the first heat transfer portion 1310 and the hub 100 is increased to activate the heat transfer more efficiently. Thus, the operating fluid may be condensed more effectively at the first heat transfer portion 1310, and the condensed operating fluid may be moved to the second heat transfer portion 1320 more effectively due to the centrifugal force, so that the operating fluid may be forced to be circulated more smoothly. Finally, the cooling efficiency may be increased more.

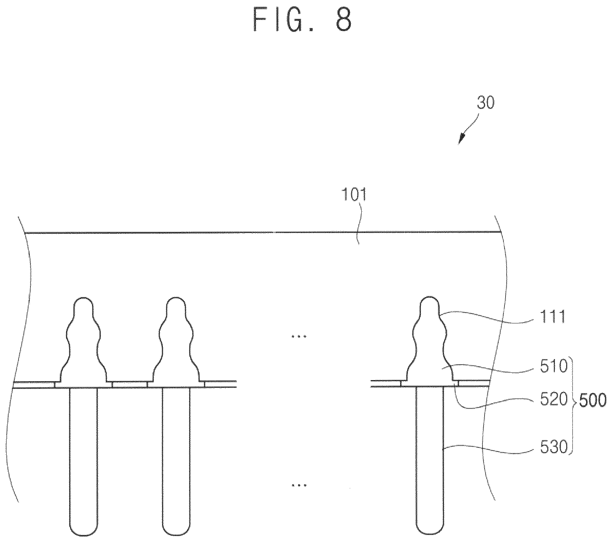

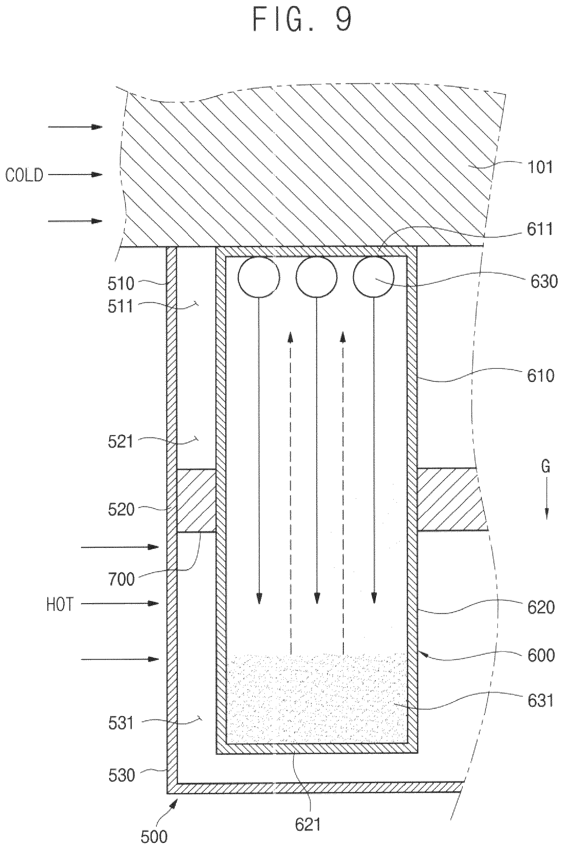

FIG. 8 is a side view partially illustrating a gas turbine according to still another example embodiment of the present invention. FIG. 9 is a cross-sectional view of a blade of the gas turbine in FIG. 8.

The gas turbine 30 according to the present example embodiment is substantially same as the gas turbine 10 according to the previous example embodiment in FIGS. 2 to 6, except for an extending direction of a hub 101 and a combining direction of a blade 500, and thus same reference numerals are used for same elements and any repetitive explanation will be omitted.

Referring to FIG. 8 and Fig. 9, the gas turbine 30 according to the present example embodiment includes a hub 101, a blade 500 and a heat transfer part 600.

The hub 101, as illustrated in the figure, extends along a direction, and has a predetermined height. The height of the hub 101 may be changed variously.

A combining slit 111 is formed into an inner portion of the hub 101, on outer surface of the hub 101 which is a lower surface of the hub 101. A plurality of the combining slits 111 may be arranged or formed along the extending direction of the hub 101 by a predetermined distance. Here, the hub 101 has a predetermined width (along a direction perpendicular to the drawing of FIG. 5), and thus the width of the combining slit 111 is substantially same as that of the hub 101.

The blade 500 includes a root 510, a platform 520 and an air foil 530.

The root 510 has the shape substantially same as the outer shape of the combining slit 111, to be combined with the combining slit 111, and thus, the root 510 is inserted into the combining slit 111. The root 510 has a first space 111 inside of the root 510.

The platform 520 is disposed over the root 510.

Here, when the root 510 of the blade 500 is combined with the combining slit 111, the platforms 520 of the blades 500 adjacent to each other may be continuously disposed with each other.

The platform 520 has a second space 521 inside of the platform 520, and the second space 521 is connected to the first space 511 of the root 510.

The air foil 530 is disposed under the platform 520. The air foil 530 has a third space 531 inside of the air foil 530, and the third space 531 is connected to the second space 521 of the platform 520.

In the present example embodiment, the blade 500 is combined with the hub 101 along a gravitational direction G as illustrated in FIG. 9, and thus the hub 101, the root 510, the platform 520 and the air foil 530 are disposed downwardly in series. Thus, the first space 511, the second space 521 and the third space 531 are also disposed or formed downwardly in series.

The heat transfer part 600 may have a metal material. The heat transfer part 600 extends through the first space 511, the second space 521 and the third space 531. The heat transfer part 600 is disposed downwardly along the gravitational direction G.

Although not shown in the figure, the heat transfer part 600 may be disposed in a plural, and the heat transfer parts 600 may be disposed by a predetermined distance.

Here, the heat transfer part 600 also includes a first heat transfer portion 610 and a second heat transfer portion 620. The first heat transfer portion 610 is disposed in the first space 511. The second heat transfer portion 620 is connected to the first heat transfer portion 610, and is disposed in the second space 521 and the third space 531.

In addition, a first end 611 of the first heat transfer portion 610 is fixed to and extends along a lower surface of the hub 101, and thus the first end 611 of the first heat transfer portion 610 is sealed.

A second end 621 of the second heat transfer portion 620 forms a lower end of the heat transfer part 600, and the second end 621 of the second heat transfer portion 620 also sealed like the first end 611 of the first heat transfer portion 610.

Thus, the heat transfer part 600 may be sealed and the heat transfer part 600 may be prevented from being leaked.

In addition, an operating fluid is received inside of the heat transfer part 600, and the operating fluid is sealed inside of the heat transfer part 600 and is prevented from being leaked.

The gas turbine 30 according to the present example embodiment may further include a charging fixing part 700. The charging fixing part 700 is charged in at least one of the first, second and third spaces 511, 521 and 531, to fix and support the heat transfer part 600. Here, the charging fixing part 700 may be charged at a portion of at least one of the first, second and third spaces 511, 521 and 531.

The charging fixing part 700 includes a metal material having a relatively high heat transfer coefficient. Thus, the heat transfer between the blade 500 and the heat transfer part 600 may be performed more efficiently.

In the present example embodiment, the heat transfer part 600 extends from the hub 101 along the gravitational direction G, and thus, the operating fluid received in the heat transfer part 600 may be affected by the gravity G.

Thus, the operating fluid is circulated inside of the heat transfer part 600 due to the gravity G, and transfers the heat of the air foil 530 to the hub 101. Thus, the heat may be effectively dissipated.

When the root 510 is combined with the combining slit 111, the first end 611 of the first heat transfer portion 610 is tightly attached to the hub 101.

With the first heat transfer portion 610 tightly attached to the hub 101, the gravity G is applied to the blade 500. Then, the gravity G causes the operating fluid 630 with the liquid state in the first heat transfer portion 610 to be moved toward the air foil 530, and thus the operating fluid 630 is moved to the second heat transfer portion 620.

Here, the operating fluid 630 with the liquid state moved to the second heat transfer portion 620, is heated by the heat HOT of the air foil 530, and thus the phase of the operating fluid 630 with the liquid state is changed to the operating fluid 631 with the gas state.

The operating fluid 630 with the liquid state having a relatively larger mass, is continuously moved toward the second heat transfer portion 620 due to the gravity G, and thus the operating fluid 630 with the liquid state is moved into the second heat transfer portion 620 to fill the second heat transfer portion 620. Thus, the operating fluid 631 with the gas state of the second heat transfer portion 620 is moved to the first heat transfer portion 610 again and is circulated.

Here, the first heat transfer portion 610 makes contact with the hub 101, and the temperature of the hub 101 is lower than that of the air foil 530, so that the operating fluid 631 with the gas state moving toward the first heat transfer portion 610 is condensed and phase-changed to be the operating fluid 630 with the liquid state. Here, as the operating fluid 631 with the gas state is condensed and phase-changed to be the operating fluid 630 with the liquid state, the heat is dissipated outwardly.

Here, the first heat transfer portion 610 may be a condensing part, and the second heat transfer portion 620 may be an evaporating part.

According to the present example embodiment, even though the blade 500 extends along the gravitational direction G and any other forces like the centrifugal force do not exist, the operating fluid of the heat transfer part 600 is continuously circulated and phase-changed inside of the heat transfer part 600 due to the gravity G, and thus the air foil 530 may be effectively cooled.

According to the present example embodiments, as the hub rotates, the operating fluid in the heat transfer part is circulated due to the centrifugal force according to the rotation of the hub and the blade, and thus a phase of the operating fluid is changed to cool the air foil. Thus, a wick structure for circulating the operating fluid may be removed.

Alternatively, when the hub extends along a direction without the rotation, the operating fluid falls freely due to the gravity and is circulated, and thus the phase of the operating fluid is changed to cool the air foil. Thus, the wick structure for circulating the operating fluid may be also removed.

Although the exemplary embodiments of the present invention have been described, it is understood that the present invention should not be limited to these exemplary embodiments but various changes and modifications can be made by one ordinary skilled in the art within the scope of the present invention as hereinafter claimed

## Claims

1. A gas turbine (10,20,30) comprising:
a hub (100) having a plurality of combining slits (110, 111) formed along an outer surface of the hub (100) by a predetermined distance;
a blade (200) having a root (210, 510) having a first space (211) inside the root (210), a platform (220, 520) having a second space (221) inside the platform (220) connected to the first space (211), and an air foil (230, 530) having a third space (231) inside of the air foil (230) connected to the second space (221), the root (210) being combined with each of the combining slits (110), the platform (220) being disposed over the root (210), the air foil (230) being disposed over the platform (220);
a heat transfer part (300) extending through the first, second and third spaces (211, 221, 231), for transferring heat of the air foil (230) to the hub (100) as an operating fluid with a liquid state moves toward the air foil (230);
wherein the heat transfer part (300) comprises:a first heat transfer portion (310) disposed in the first space (211), a first end (311) of the first heat transfer portion (310) being sealed; anda second heat transfer portion (320) disposed in the second (221) and third spaces (231), a first end of the second heat transfer portion (320) being connected to a second end of the first heat transfer portion (310), a second end (321) of the second heat transfer portion (320) being sealed; **characterised by**
a fixing part (400) extending between the heat transfer part (300) and at least one of the root (210), the platform (220), and the air foil (230), to fix and support the heat transfer part (300),
wherein the fixing part (400) includes a metal material having a relatively high heat transfer coefficient; and
wherein as a centrifugal force is generated by the rotation of the hub, the operating fluid is condensed and liquefied at the first heat transfer portion (310), moves towards the second heat transfer portion (320), is evaporated at the second heat transfer portion, and is circulated to the first heat transfer portion (310).

2. The gas turbine (10) of claim 1, wherein the operating fluid is evaporated by the heat of the air foil (230) at the second heat transfer portion (320), and the operating fluid is condensed to dissipate the heat to outside as the operating fluid moves to the first heat transfer portion (310).

3. The gas turbine (10) of claim 2, wherein the hub (100) rotates with respect to a central axis of the hub (100), and an outer surface of the hub extends along a circumferential direction with respect to the central axis.

4. The gas turbine (10) of claim 2, wherein the blade (200) is disposed to extend downwardly from the hub (100) when the blade (200) is not rotated.

5. The gas turbine (10) of claim 1, wherein a cross-sectional area of the heat transfer part (300) gradually increases from a second heat transfer portion (320) to a first heat transfer portion (310).

6. The gas turbine (10) of claim 1, wherein a plurality of the heat transfer parts (300) is arranged with a predetermined distance, and an outer shape of each of the heat transfer parts (300) is formed according to an outer shape of the air foil (230).

7. The gas turbine (10) of claim 2, wherein a first end of the first heat transfer portion (310) is positioned in a line substantially same as a lower surface of the root (210), and the first end (311) of the first heat transfer portion (310) is tightly attached to the hub (100) when the root (210) is combined with the combining slit (110).

## Patentansprüche

1. Gasturbine (10, 20, 30), umfassend:
eine Nabe (100) mit einer Vielzahl von verbindenden Schlitzen (110, 111), die entlang einer Außenfläche der Nabe (100) in einem vorbestimmten Abstand geformt sind;
eine Schaufel (200) mit einer Wurzel (210, 510), die einen ersten Raum (211) innerhalb des Fußes (210) aufweist, eine Plattform (220, 520), die einen zweiten Raum (221) innerhalb der Plattform (220) aufweist, die mit dem ersten Raum (211) verbunden ist, und ein Flügelprofil (230, 530), das einen dritten Raum (231) innerhalb des Flügelprofils (230) aufweist, der mit dem zweiten Raum (221) verbunden ist, wobei die Wurzel (210) mit jedem der verbindenden Schlitze (110) verbunden wird, die Plattform (220) über der Wurzel (210) angeordnet wird, das Flügelprofil (230) über der Plattform (220) angeordnet wird;
ein Wärmeübertragungsteil (300), das sich durch den ersten, zweiten und dritten Raum (211, 221, 231) erstreckt, um Wärme des Flügelprofils (230) an die Nabe (100) zu übertragen, während sich ein Betriebsfluid in einem flüssigen Zustand zu dem Flügelprofil (230) bewegt;
wobei das Wärmeübertragungsteil (300) Folgendes umfasst:
einen ersten Wärmeübertragungsabschnitt (310), der in dem ersten Raum (211) angeordnet ist, ein erstes Ende (311) des ersten Wärmeübertragungsabschnitts (310), der versiegelt wird; und einen zweiten Wärmeübertragungsabschnitt (320), der in dem zweiten (221) und dritten Raum (231) angeordnet ist, wobei ein erstes Ende des zweiten Wärmeübertragungsabschnitts (320) mit einem zweiten Ende des ersten Wärmeübertragungsabschnitts (310) verbunden wird, ein zweites Ende (321) des zweiten Wärmeübertragungsabschnitts (320) versiegelt wird;
**dadurch gekennzeichnet, dass** sich ein Befestigungsteil (400) zwischen dem Wärmeübertragungsteil (300) und mindestens entweder der Wurzel (210), der Plattform (220) oder dem Flügelprofil (230) erstreckt, um das Wärmeübertragungsteil (300) zu fixieren und zu stützen,
wobei das Befestigungsteil (400) ein metallisches Material einschließt, das einen relativ hohen Wärmeübertragungskoeffizienten aufweist; und
wobei, da eine Zentrifugalkraft durch die Rotation der Nabe erzeugt wird, das Betriebsfluid an dem ersten Wärmeübertragungsabschnitt (310) verdichtet und verflüssigt wird, sich zu dem zweiten Wärmeübertragungsabschnitt (320) bewegt, an dem zweiten Wärmeübertragungsabschnitt verdampft wird und zu dem ersten Wärmeübertragungsabschnitt (310) geleitet wird.

2. Gasturbine (10) nach Anspruch 1, wobei das Betriebsfluid durch die Wärme des Flügelprofils (230) an dem zweiten Wärmeübertragungsabschnitt (320) verdampft wird, und das Betriebsfluid verdichtet wird, um die Wärme nach außen abzuleiten, wenn sich das Betriebsfluid zu dem ersten Wärmeübertragungsabschnitt (310) bewegt.

3. Gasturbine (10) nach Anspruch 2, wobei sich die Nabe (100) im Verhältnis zu einer Mittelachse der Nabe (100) dreht, und sich eine Außenfläche der Nabe entlang einer Umfangsrichtung im Verhältnis zu der Mittelachse erstreckt.

4. Gasturbine (10) nach Anspruch 2, wobei die Schaufel (200) so angeordnet ist, dass sie sich von der Nabe (100) nach unten erstreckt, wenn sich die Schaufel (200) nicht dreht.

5. Gasturbine (10) nach Anspruch 1, wobei eine Querschnittsfläche des Wärmeübertragungsteils (300) schrittweise von einem zweiten Wärmeübertragungsabschnitt (320) zu einem ersten Wärmeübertragungsabschnitt (310) ansteigt.

6. Gasturbine (10) nach Anspruch 1, wobei eine Vielzahl der Wärmeübertragungsteile (300) in einem vorbestimmten Abstand angeordnet ist, und eine Außenform jedes Wärmeübertragungsteils (300) gemäß einer Außenform des Flügelprofils (230) geformt ist.

7. Gasturbine (10) nach Anspruch 2, wobei ein erstes Ende des ersten Wärmeübertragungsabschnitts (310) in einer Linie positioniert ist, die im Wesentlichen gleich einer unteren Fläche der Wurzel (210) ist, und das erste Ende (311) des ersten Wärmeübertragungsabschnitts (310) fest mit der Nabe (100) verbunden ist, wenn die Wurzel (210) mit dem verbindenden Schlitz (110) verbunden wird.

## Revendications

1. Turbine à gaz (10, 20, 30) comprenant :
un moyeu (100) présentant une pluralité de fentes de combinaison (110, 111) formées le long d'une surface extérieure du moyeu (100) sur une distance prédéfinie ;
une aube (200) présentant une racine (210, 510) présentant un premier espace (211) à l'intérieur de la racine (210), une plateforme (220, 520) présentant un deuxième espace (221) à l'intérieur de la plateforme (220) relié au premier espace (211), et un profil aérodynamique (230, 530) présentant un troisième espace (231) à l'intérieur du profil aérodynamique (230) relié au deuxième espace (221), la racine (210) étant combinée avec chacune des fentes de combinaison (110), la plateforme (220) étant disposée sur la racine (210), le profil aérodynamique (230) étant disposé sur la plateforme (220) ;
une partie de transfert de chaleur (300) s'étendant à travers les premier, deuxième et troisième espaces (211, 221, 231), destinée à transférer la chaleur du profil aérodynamique (230) au moyeu (100) lorsqu'un fluide de travail à l'état liquide se déplace vers le profil aérodynamique (230) ;
dans laquelle la partie de transfert de chaleur (300) comprend :
une première portion de transfert de chaleur (310) disposée dans le premier espace (211), une première extrémité (311) de la première portion de transfert de chaleur (310) étant fermée hermétiquement ; et une seconde portion de transfert de chaleur (320) disposée dans les deuxième (221) et troisième espaces (231), une première extrémité de la seconde portion de transfert de chaleur (320) étant reliée à une seconde extrémité de la première portion de transfert de chaleur (310), une seconde extrémité (321) de la seconde portion de transfert de chaleur (320) étant fermée hermétiquement ;
**caractérisée par** une partie de fixation (400) s'étendant entre la partie de transfert de chaleur (300) et au moins une parmi la racine (210), la plateforme (220) et le profil aérodynamique (230), pour fixer et supporter la partie de transfert de chaleur (300),
dans laquelle la partie de fixation (400) comporte un matériau métallique présentant un coefficient de transfert de chaleur relativement élevé ; et
dans laquelle comme une force centrifuge est générée par la rotation du moyeu, le fluide de travail est condensé et liquéfié au niveau de la première portion de transfert de chaleur (310), se déplace vers la seconde portion de transfert de chaleur (320), s'évapore au niveau de la seconde portion de transfert de chaleur et circule vers la première portion de transfert de chaleur (310).

2. Turbine à gaz (10) selon la revendication 1, dans laquelle le fluide de travail est évaporé par la chaleur du profil aérodynamique (230) au niveau de la seconde portion de transfert de chaleur (320) et le fluide de travail est condensé pour dissiper la chaleur vers l'extérieur lorsque le fluide de travail se déplace vers la première portion de transfert de chaleur (310).

3. Turbine à gaz (10) selon la revendication 2, dans laquelle le moyeu (100) tourne par rapport à un axe central du moyeu (100), et une surface extérieure du moyeu s'étend le long d'une direction circonférentielle par rapport à l'axe central.

4. Turbine à gaz (10) selon la revendication 2, dans laquelle l'aube (200) est disposée pour s'étendre vers le bas à partir du moyeu (100) lorsque l'aube (200) n'est pas en rotation.

5. Turbine à gaz (10) selon la revendication 1, dans laquelle une aire de section transversale de la partie de transfert de chaleur (300) augmente de manière progressive depuis une seconde portion de transfert de chaleur (320) à une première portion de transfert de chaleur (310).

6. Turbine à gaz (10) selon la revendication 1, dans laquelle une pluralité des parties de transfert de chaleur (300) est agencée avec une distance prédéfinie et une forme extérieure de chacune des parties de transfert de chaleur (300) est formée selon une forme extérieure du profil aérodynamique (230).

7. Turbine à gaz (10) selon la revendication 2, dans laquelle une première extrémité de la première portion de transfert de chaleur (310) est positionnée dans une ligne sensiblement identique à une surface inférieure de la racine (210) et la première extrémité (311) de la première portion de transfert de chaleur (310) est fermement attachée au moyeu (100) lorsque la racine (210) est combinée avec la fente de combinaison (110).
